# EUROPEAN PATENT APPLICATION

(11) **EP 2 551 005 A1**
(43) Date of publication of application: **30.01.2013**
(21) Application number: 12177764.3
(22) Date of filing: 25.07.2012
(51) Int. Cl.: B01D 53/00, F25B 21/00

(54) **System and method for carbon dioxide removal**

(30) Priority: 28.07.2011 US 201113193237
(71) Applicant: General Electric Company, Schenectady, NY 12345 (US)
(72) Inventor: Vogel, Christian, Niskayuna, NY New York 12309 (US); Kulkarni, Parag Prakash, Niskayuna, NY New York 12309 (US); Salazar, Miguel Angel Gonzalez, Niskayuna, NY New York 12309 (US)
(74) Representative: Cleary, Fidelma

(57) **Abstract**

A carbon dioxide (CO₂) removal system (112) includes an external heat transfer device (130). The system also includes a magnetocaloric heat transfer device (140) coupled in flow communication with the external heat transfer device. The system further includes a cryogenic CO₂ capture system (160) coupled in flow communication with the magnetocaloric heat transfer device.

## Description

### BACKGROUND

The subject matter described herein relates generally to fossil fuel-fired power generation facilities and, more particularly, to a system and method for removing carbon dioxide from an associated flue gas stream via magnetic refrigeration.

Known fossil fuel-fired power generation facilities combust fossil fuels with air and produce flue gases that include carbon dioxide (CO₂). Many of these known facilities use known methods to remove at least a portion of the CO₂. Some known methods are used to facilitate pre-combustion capture, including shift conversion in fuel gasification systems. These known pre-combustion methods limit the fuel source to gasification systems, require a significant capital investment, and increase operational costs. Other known methods include oxyfuel combustion, wherein an oxygen-enriched gas is used rather than compressed air for combustion, thereby producing CO₂-rich flue gases that facilitate CO₂ removal due to the high concentration of CO₂ therein making conventional collection easier. These known oxyfuel combustion methods also require a significant capital investment, and result in increased operational costs, including increased auxiliary power consumption. Further, additional known methods include post-combustion capture methods that typically use at least one method of separation of the CO₂ from the flue gases. Some such known post-combustion methods of CO₂ separation and removal include chemical solvent scrubbing, physical solvent scrubbing, adsorption, and membranes, wherein each of such methods requires contacting the flue gas with a substance that facilitates CO₂ separation from the flue gases. These known post-combustion methods further require a significant capital investment, and result in increased operational costs, including increased auxiliary power consumption.

An additional known post-combustion method of CO₂ separation and removal is cryogenic CO₂ capture in conjunction with at least some conventional upstream cooling of the flue gases. At least some of these known cryogenic CO₂ capture methods include use of the Brayton cycle, i.e., compression of the flue gas followed by subsequent expansion. However, use of known cryogenic CO₂ capture methods with flue gases cooled to approximately ambient temperatures requires significant auxiliary power usage by a flue gas compression device. Moreover, subsequent heating of the flue gases after compression requires use of a significant amount of refrigerant-based cooling energy to reduce the temperature of the flue gases to sufficiently facilitate condensation and removal of CO₂ prior to expansion of the flue gases. Furthermore, the percentage of CO₂ removed from the flue gas stream is a function of the temperature of the flue gas. For example, as the flue gas temperature decreases, the percentage of CO₂ removed increases, and the costs of energy to achieve this result increases. Therefore, this known configuration for cryogenic CO₂ capture results in a relatively low value for the associated coefficient of performance (COP), i.e., the ratio of the heat removed from the flue gas to the energy used to remove that heat. The relatively high energy usage to remove the heat from the flue gas and the energy used to compress the flue gases cooperate to significantly impact the costs of operating the associated facilities.

### BRIEF DESCRIPTION OF THE INVENTION

In one aspect, a carbon dioxide (CO₂) removal system is provided. The CO₂ removal system includes an external heat transfer device. The CO₂ removal system also includes a magnetocaloric heat transfer device coupled in flow communication with the external heat transfer device. The CO₂ removal system further includes a cryogenic CO₂ capture system coupled in flow communication with the magnetocaloric heat transfer device.

In another aspect, a combustion facility includes at least one combustion device and the carbon dioxide (CO₂) removal system as described above.

In yet another aspect, a method of removing carbon dioxide (CO₂) from a fluid stream is provided. The method includes channeling a fluid stream to a magnetocaloric heat transfer device. The method also includes removing heat from the fluid stream via the magnetocaloric heat transfer device. The method further includes channeling the fluid stream to a cryogenic CO₂ capture system.

### BRIEF DESCRIPTION OF THE DRAWINGS

Embodiments of the present invention will now be described, by way of example only, with reference to the accompanying drawings in which:
FIG. 1 is a schematic diagram of an exemplary gas turbine power generation facility;
FIG. 2 is a schematic diagram of an exemplary cryogenic carbon dioxide (CO₂) removal system that may be used with the gas turbine power generation facility shown in FIG. 1; and
FIG. 3 is a flow chart illustrating an exemplary method that may be used in assembling the cryogenic CO₂ removal system shown in FIG. 2.

Unless otherwise indicated, the drawings provided herein are meant to illustrate key inventive features of the invention. These key inventive features are believed to be applicable in a wide variety of systems comprising one or more embodiments of the invention. As such, the drawings are not meant to include all conventional features known by those of ordinary skill in the art to be required for the practice of the invention.

### DETAILED DESCRIPTION OF THE INVENTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

The exemplary systems and methods described herein overcome disadvantages of known carbon dioxide (CO₂) removal systems by providing additional, efficient, heat removal devices upstream of a cryogenic CO₂ removal system. More specifically, an energy-efficient, magnetocaloric heat transfer device is used to cool a hot fluid prior to introduction of the fluid to a cryogenic CO₂ removal system that uses the Brayton cycle to freeze and remove CO₂ from the fluid. Such magnetocaloric heat transfer devices facilitate a reduction in the size and energy consumption requirements of the compression portion of the Brayton cycle such that the overall coefficient of performance (COP) of the CO₂ removal system is increased as compared to known CO₂ removal systems. The associated increase in efficiency of the cryogenic CO₂ capture system as a function of the prior magnetocaloric heat transfer, as compared to without such heat transfer, facilitates a reduced energy consumption by the system. Moreover, such a reduction in energy consumption by the compression portion of the cryogenic CO₂ capture system is sufficient to overcome the additional energy resources used to operate the magnetocaloric heat transfer device. Therefore, overall operation of the CO₂ removal system is more efficient with respect to energy consumption, and the associated operating costs are reduced.

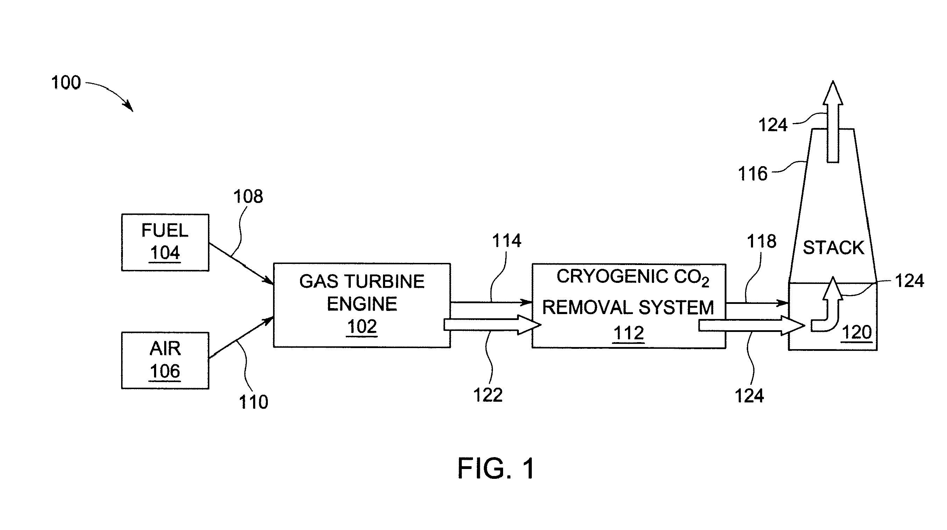

FIG. 1 is a schematic diagram of an exemplary power generation facility 100 that uses at least one combustion process to release thermal energy that is converted to electric power. In the exemplary embodiment, facility 100 is a fossil fuel-fired power generation facility that uses a cryogenic carbon dioxide removal system, and more specifically, an exemplary gas turbine power generation facility 100, herein referred to as gas turbine facility 100. Alternatively, the methods and apparatus as described herein may be used with any conventional power generation facility in any suitable configuration including, without limitation, coal-fired power plant boilers, oil-fired power plant boilers, and/or bio-fuel-fired boilers. Also, alternatively, the methods and apparatus as described herein may be used with any conventional power generation device in any suitable configuration including, without limitation, reciprocating engines such as diesel engines, gasoline engines, and engines that combust bio-fuels and their derivatives. It should be understood that gas turbine facility 100 may contain numerous other elements than those shown. Moreover, in some embodiments, gas turbine facility 100 may be a portion of a larger facility, including, without limitation, an integrated gasification combined-cycle (IGCC) power generation plant.

In the exemplary embodiment, gas turbine facility 100 includes a gas turbine engine assembly 102. Gas turbine engine assembly 102 is coupled in flow communication with at least one fuel source 104 and at least one air source 106. Fuel source 104 is coupled in flow communication with gas turbine engine assembly 102 via a fuel conduit 108. Air source 106 is coupled in flow communication with gas turbine engine assembly 102 via an air conduit 110. Gas turbine facility 100 also includes a cryogenic carbon dioxide (CO₂ removal system 112 coupled in flow communication with gas turbine engine assembly 102 via a hot flue gas exhaust duct 114. Gas turbine facility 100 further includes an exhaust stack 116 coupled in flow communication with cryogenic carbon dioxide removal system 112 via a cold flue gas exhaust duct 118 and stack plenum 120.

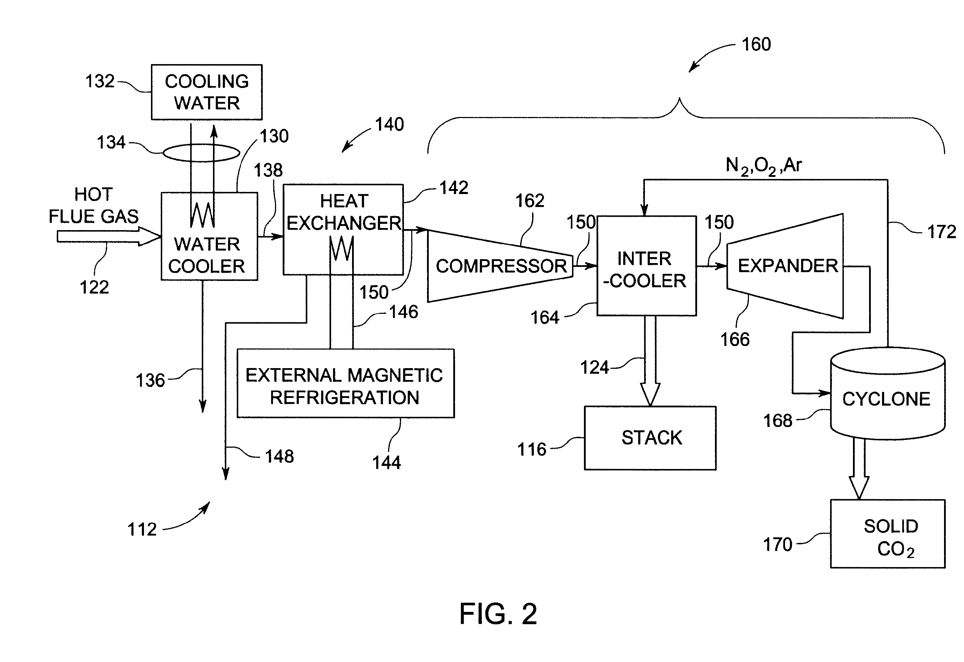

In operation, gas turbine assembly 102 mixes air and fuel (neither shown), produces hot combustion gases (not shown), and converts the heat energy within the combustion gases to rotational energy that is subsequently converted to electrical energy for transmission to at least one auxiliary load (not shown) within gas turbine facility 100 and/or an electrical power grid (not shown). The hot combustion gases are cooled to form a fluid stream, i.e., a hot flue gas stream 122 that includes a first concentration of CO₂. Hot flue gas stream 122 is channeled to cryogenic CO₂ removal system 112, wherein a significant portion of CO₂ is removed from the flue gas and a cold flue gas stream 124 is channeled to exhaust stack 116 with a second concentration of CO₂ that is significantly smaller than the first concentration of CO₂. Cold flue gas stream 124 also includes nitrogen (N₂), oxygen (O₂), and argon (Ar). FIG. 2 is a schematic diagram of cryogenic CO₂ removal system 112 that may be used with gas turbine facility 100 (shown in FIG. 1). In the exemplary embodiment, cryogenic CO₂ removal system 112 receives hot flue gas stream 122 from any conventional fossil-fuel fired power generation devices, including, without limitation, gas turbine engine assembly 102 (shown in FIG. 1) and coal-fired and oil-fired power plant boilers. For those power generation devices that combust materials such as coal, standard methods of particulate material removal are employed to substantially scrub hot flue gas stream 122 of particulates prior to channeling such gases to cryogenic CO₂ removal system 112.

In the exemplary embodiment, cryogenic CO₂ removal system 112 includes an external heat transfer device, e.g., an externally-cooled heat exchanger 130. Heat exchanger 130 is a shell-and-tube heat exchanger coupled in flow communication with a cooling water source 132 via a cooling water conduit 134. Cooling water conduit 134 includes a plurality of water tubes (not shown) that channel the cooling water through heat exchanger 130. Heat exchanger 130 includes a condensate drain conduit 136 that is configured to channel condensed water vapor from the hot flue gases channeled through heat exchanger 130. Hot flue gas stream 122 transfers a significant portion of heat to the cooling water such that a first cooled flue gas stream 138 is channeled from heat exchanger 130. First cooled flue gas stream 138 has a temperature that is substantially equal to ambient temperatures proximate to cryogenic CO₂ removal system 112. For example, without limitation, in North America and Europe, ambient temperature conditions may range from approximately 35 degrees Celsius (°C) (approximately 95 degrees Fahrenheit (°F)) to approximately -4°C (25°F), with a more typical temperature range being between approximately 20°C (68°F) and approximately 0°C (32°F).

Also, in the exemplary embodiment, cryogenic CO₂ removal system 112 includes a magnetocaloric heat transfer device 140 coupled in flow communication with externally-cooled heat exchanger 130. Magnetocaloric heat transfer device 140 includes a refrigerant heat exchanger 142 that is a shell-and-tube heat exchanger coupled in flow communication with an external magnetic refrigeration device 144 via a refrigerant conduit 146. Refrigerant conduit 146 includes a plurality of refrigerant tubes (not shown) that channel refrigerant through refrigerant heat exchanger 142. Refrigerant heat exchanger 142 includes a condensate drain conduit 148 that is configured to channel condensed water vapor from the cooled flue gases channeled through refrigerant heat exchanger 142.

External magnetic refrigeration device 144 uses the magnetocaloric effect to remove heat from first cooled flue gas stream 138. As used herein, the magnetocaloric effect refers to an entropy change accompanied by a magnetic phase transition of a magnetocaloric material, wherein cooling of the magnetocaloric material is facilitated by using a change in temperature resulting from such entropy change of the magnetocaloric material. In the exemplary embodiment, the magnetocaloric material used is a gadolinium (Gd) alloy. Alternatively, refrigeration device 144 may use any magnetocaloric working material that enables operation of device 144 as described herein, including, without limitation, lanthanum (La) alloys and ferrous-manganese (FeMn) alloys. Some alternative embodiments of magnetic refrigeration device 144 may include multi-stage magnetic regenerators with different magnetocaloric materials and/or different compositions associated with each of the different stages.

For example, without limitation, Gd₅(Si₂Ge₂) is used within magnetic refrigeration device 144, wherein a temperature of such magnetocaloric material increases when it enters a magnetic field and decreases when it leaves the magnetic field. More specifically, Gd₅(Si₂Ge₂) alternates between two states. The first state is a low magnetic entropy state with a high degree of magnetic orientation created by applying a magnetic field to the magnetocaloric material near its Curie temperature, i.e., that temperature at which a magnetic material becomes paramagnetic on heating. The second state is a high magnetic entropy state with a low degree of magnetic orientation, i.e., substantially random orientations that are created by removing the magnetic field from the magnetocaloric material. Once the magnetic field is removed, the magnetocaloric material transfers the heat generated in the first state to the surrounding environment to attain a lower temperature than the material had prior to being exposed to the magnetic field.

Such transition between high and low magnetic entropy states manifests as transition between a low lattice entropy state and a high lattice entropy state, respectively, thereby resulting in warming up and cooling down, respectively, of the magnetocaloric material when exposed to magnetization and demagnetization, respectively. Therefore, the process of alternating magnetization and demagnetization of a magnetocaloric material is a substantially reversible adiabatic process, and is substantially isentropic. Moreover, successive exposures to, and subsequent removals from, the magnetic field facilitates successive cooling of the magnetocaloric material.

In the exemplary embodiment, external magnetic refrigeration device 144 includes a plurality of stationary permanent magnets (not shown) oriented and separated form each other by a predetermined distance. Alternatively, external magnetic refrigeration device 144 includes at least one electromagnet (not shown) in conjunction with, or in lieu of, the stationary permanent magnets. Such electromagnets may include superconducting magnets, wherein such superconducting magnets include high magnetic field strengths. Such high magnetic field strengths may facilitate an increased cooling power density of refrigeration device 144 such that the cooling efficiency of device 144 is increased. Increasing the operational efficiency of refrigeration device 144 via use of superconducting electromagnets may also facilitate decreasing overall power consumption of power generation facility 100, thereby facilitating an increase of economic efficiencies associated with operating facility 100.

External magnetic refrigeration device 144 also includes a transit mechanism that moves the Gd₅(Si₂Ge₂) in and out of the magnetic fields generated by the permanent magnets. The refrigerant is channeled via refrigerant conduit 146 to the vicinity of the cooled Gd₅(Si₂Ge₂) such that heat in the refrigerant is transferred to the Gd₅(Si₂Ge₂) such that the Gd₅(Si₂Ge₂) is increased in temperature and the refrigerant is reduced in temperature. The cooled refrigerant is channeled through refrigerant heat exchanger 142 to transfer heat from first cooled flue gas stream 138 such the temperature of a second cooled flue gas stream 150 is between approximately -50°C (-58°F) and approximately -60°C (-76°F).

Further, in the exemplary embodiment, cryogenic CO₂ removal system 112 includes a cryogenic CO₂ capture system 160 coupled in flow communication with magnetocaloric heat transfer device 140. Cryogenic CO₂ capture system 160 includes a compressor 162 coupled in flow communication with refrigerant heat exchanger 142 to receive second cooled flue gas stream 150. Compressor 162 pressurizes, and heats, second cooled flue gas stream 150. Cryogenic CO₂ capture system 160 also includes an intercooler 164 coupled in flow communication with compressor 162, wherein heat transferred to second cooled flue gas stream 150 as a result of compression is removed. Cryogenic CO₂ capture system 160 further includes an expander 166 coupled in flow communication with intercooler 164, wherein the temperature of second cooled flue gas stream 150 is decreased to approximately -100°C (-148°F). In some embodiments, expander 166 is a turbomachine that may be used to generate useful work and/or electric power. The CO₂ in second cooled flue gas stream 150 desublimates, i.e., transitions to a solid phase directly from a gaseous phase, skipping the liquid phase. Cryogenic CO₂ capture system 160 also includes a cyclone separator 168 coupled in flow communication with expander 166. Cyclone separator 168 separates solid CO₂ 170, for disposal and/or sequestration, and remaining constituents of flue gas stream 150, i.e., a cold N₂-rich stream 172 that includes O₂, and Ar. Cold N₂-rich stream 172 is channeled to intercooler 164 to facilitate transferring heat from second cooled flue gas stream 150 after compression to stream 172 to generate cold flue gas stream 124.

In the exemplary embodiment, cryogenic CO₂ capture system 160 uses the Brayton cycle and has a stand-alone COP in a range between approximately 2 and 3. The amount of work that is required to transfer heat from first cooled flue gas stream 138 is a significant limitation to the overall economics of cryogenic CO₂ capture. However, magnetocaloric heat transfer device 140 facilitates transferring heat from first cooled flue gas stream 138 such the temperature of second cooled flue gas stream 150 is between approximately -50°C (-58°F) and approximately -60°C (-76°F). Therefore, the size and energy consumption requirements of compressor 162 may be reduced such that the overall COP of cryogenic CO₂ capture system 160 is increased to a range of approximately 5 to 6. The increase in efficiency of cryogenic CO₂ capture system 160 with magnetocaloric heat transfer device 140, as compared to without device 140, facilitates reduced energy consumption by system 160. Such a reduction in energy consumption by cryogenic CO₂ capture system 160 is sufficient to overcome the additional energy resources used to operate magnetocaloric heat transfer device 140. Therefore, overall operation of cryogenic CO₂ removal system 112 and gas turbine facility 100 is more efficient with respect to energy consumption, and operating costs of facility 100 is decreased.

Some alternative embodiments of cryogenic CO₂ removal system 112 may include a plurality of sets of magnetocaloric heat transfer device 140 and cryogenic CO₂ capture system 160 in series. Also, some alternative embodiments of cryogenic CO₂ removal system 112 may include a plurality of magnetocaloric heat transfer devices 140 in series prior to cryogenic CO₂ capture system 160. Further, some alternative embodiments of cryogenic CO₂ removal system 112 may include a plurality of cryogenic CO₂ capture systems 160 in series after magnetocaloric heat transfer devices 140. Moreover, some alternative embodiments of cryogenic CO₂ removal system 112 may include any combination of magnetocaloric heat transfer devices 140 and CO₂ removal systems 112.

In operation of CO₂ removal system 112, hot flue gas stream 122, substantially scrubbed of combustion particulate by-products, is channeled to externally-cooled heat exchanger 130. At least some of the water vapor in hot flue gas stream 122 is removed as the hot flue gases are cooled to approximately ambient temperatures to form first cooled flue gas stream 138. First cooled flue gas stream 138 is channeled to magnetocaloric heat transfer device 140. Stream 138 may have temperature conditions that range from approximately 35°C (approximately 95°F) to approximately -4°C (25°F), with a more typical temperature range being between approximately 20°C (68°F) and approximately 0°C (32°F). At least some of the remaining water vapor in first cooled flue gas stream 138 is removed as the flue gases are cooled to approximately -50°C (-58°F) and approximately -60°C (-76°F) to form second cooled flue gas stream 150.

Also, in operation of CO₂ removal system 112, second cooled flue gas stream 150 is channeled to cryogenic CO₂ capture system 160, i.e., compressor 162, wherein stream 150 is pressurized and heated. Second cooled flue gas stream 150 is further channeled to intercooler 164, wherein heat transferred to second cooled flue gas stream 150 as a result of compression is removed. Second cooled flue gas stream 150 is further channeled to expander 166, wherein the temperature of stream 150 is decreased to approximately -100°C (-148°F). The CO₂ in second cooled flue gas stream 150 transitions to a solid phase such that cyclone separator 168 separates solid CO₂ 170 for disposal and/or sequestration. Cold N₂-rich stream 172 is channeled to intercooler 164 to facilitate transferring heat from second cooled flue gas stream 150 after compression to stream 172 to generate cold flue gas stream 124.

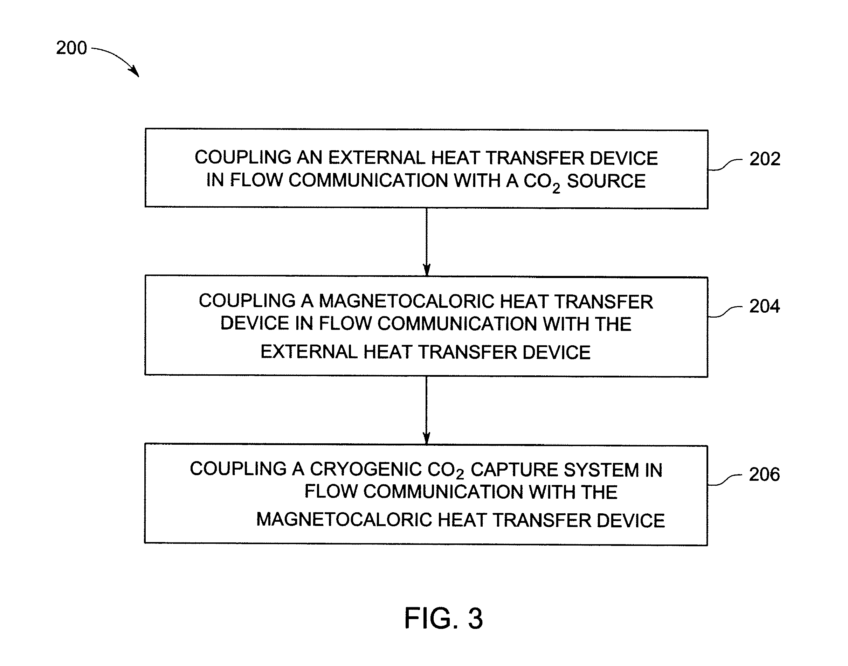

FIG. 3 is a flow chart illustrating an exemplary method 200 that may be used in assembling cryogenic CO₂ removal system 112 (shown in FIG. 2). In the exemplary embodiment, externally-cooled heat exchanger 130 (shown in FIG. 2) is coupled 202 in flow communication with a CO₂ source, e.g., gas turbine engine assembly 102 (shown in FIG. 1). Also, magnetocaloric heat transfer device 140 (shown in FIG. 2) is coupled 204 in flow communication with externally-cooled heat exchanger 130. Further, cryogenic CO₂ capture system 160 (shown in FIG. 2) is coupled 206 in flow communication with magnetocaloric heat transfer device 140.

The above-described described magnetocaloric heat transfer device for a carbon dioxide (CO₂) removal system provides a cost-effective method for increasing an efficiency of such CO₂ removal systems. Specifically, the devices, systems, and methods described herein provide additional, efficient, heat removal devices upstream of a cryogenic CO₂ removal system. More specifically, an energy-efficient, magnetocaloric heat transfer device is used to cool a hot fluid prior to introduction of the fluid to a cryogenic CO₂ removal system that uses the Brayton cycle to freeze and remove CO₂ from the fluid. Such magnetocaloric heat transfer devices facilitate a reduction in the size and energy consumption requirements of the compression portion of the Brayton cycle such that the overall coefficient of performance (COP) of the CO₂ removal system is increased as compared to known CO₂ removal systems. The associated increase in efficiency of the cryogenic CO₂ capture system as a function of the prior magnetocaloric heat transfer, as compared to without such heat transfer, facilitates a reduced energy consumption by the system. Moreover, such a reduction in energy consumption by the compression portion of the cryogenic CO₂ capture system is sufficient to overcome the additional energy resources used to operate the magnetocaloric heat transfer device. Therefore, overall operation of the CO₂ removal system is more efficient with respect to energy consumption, and the associated operating costs are reduced.

Exemplary embodiments of the devices, systems, and methods for magnetocaloric heat transfer devices for CO₂ removal systems are described above in detail. The devices, systems, and methods are not limited to the specific embodiments described herein, but rather, components of systems and/or steps of the method may be utilized independently and separately from other components and/or steps described herein. For example, the systems and methods may also be used in combination with other rotary systems and methods, and are not limited to practice with only the magnetocaloric heat transfer devices for CO₂ removal systems as described herein. Rather, the exemplary embodiment can be implemented and utilized in connection with many other cooling system and material removal system applications.

Although specific features of various embodiments of the invention may be shown in some drawings and not in others, this is for convenience only. Moreover, references to "one embodiment" in the above description are not intended to be interpreted as excluding the existence of additional embodiments that also incorporate the recited features. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A carbon dioxide (CO₂) removal system (112) comprising:
an external heat transfer device (130);
a magnetocaloric heat transfer device (140) coupled in flow communication with said external heat transfer device; and
a cryogenic CO₂ capture system (160) coupled in flow communication with said magnetocaloric heat transfer device.

2. A CO₂ removal system (112) in accordance with Claim 1, wherein said external heat transfer device (130) is configured to channel a fluid stream to said magnetocaloric heat transfer device (140) at temperatures between approximately 35°C and-4°C.

3. A CO₂ removal system (112) in accordance with Claim 1 or 2, wherein said magnetocaloric heat transfer device (140) comprises:
a refrigerant heat exchanger (142); and
an external magnetic refrigeration device (144) coupled in flow communication with said refrigerant heat exchanger.

4. A CO₂ removal system (112) in accordance with Claim 3, wherein said external magnetic refrigeration device (144) is configured to use the magnetocaloric effect to remove heat from a refrigerant.

5. A CO₂ removal system (112) in accordance with Claim 4, wherein said refrigerant heat exchanger (142) is configured to:
receive a fluid stream from said external heat transfer device (130); and
transfer heat from the fluid stream to the refrigerant.

6. A CO₂ removal system (112) in accordance with any preceding Claim, wherein said cryogenic CO₂ capture system (160) comprises:
a compressor (162) coupled in flow communication with said magnetocaloric heat transfer device (140);
a heat exchanger (164) coupled in flow communication with said compressor; and
an expander device (166) coupled in flow communication with said heat exchanger, said heat exchanger and said expander device are configured to cooperate to generate a fluid stream having temperatures less than approximately -60°C.

7. A CO₂ removal system (112) in accordance with Claim 6, wherein said cryogenic CO₂ capture system (160) further comprises a cyclone separator (168) configured to remove substantially solid CO₂ (170) from the fluid stream.

8. A combustion facility (100) comprising:
at least one combustion device (102); and
the carbon dioxide (CO₂) removal system (112) of any of claims 1 to 7.

9. A method of removing carbon dioxide (CO₂) from a fluid stream, said method comprising:
channeling a fluid stream to a magnetocaloric heat transfer device (140);
removing heat from the fluid stream via the magnetocaloric heat transfer device (140); and
channeling the fluid stream to a cryogenic CO₂ capture system (160).

10. A method in accordance with Claim 9, wherein channeling a fluid stream to a magnetocaloric heat transfer device (140) comprises channeling a fluid stream to the magnetocaloric heat transfer device (140) at temperatures between approximately 35°C and -4°C.

11. A method in accordance with Claim 9 or 10, wherein removing heat from the fluid stream via the magnetocaloric heat transfer device (140) comprises:
channeling a refrigerant from an external magnetic refrigeration device (144) to a refrigerant heat exchanger (142);
channeling the fluid stream through the refrigerant heat exchanger (142);
channeling the refrigerant from the refrigerant heat exchanger (142) to the external magnetic refrigeration device (144); and
using the magnetocaloric effect to remove heat from the refrigerant within the external magnetic refrigeration device (144).

12. A method in accordance with any of Claims 9 to 11, wherein removing heat from the fluid stream via the magnetocaloric heat transfer device (140) comprises:
removing at least some water vapor from the fluid stream; and
cooling the fluid stream to temperatures between approximately -50°C and - 60°C (-76°F).

13. A method in accordance with any of Claims 9 to 12, wherein channeling the fluid stream to a cryogenic CO₂ capture system (16) comprises:
compressing the fluid stream channeled from the magnetocaloric heat transfer device (140), thereby pressurizing and heating the fluid stream;
transferring heat from the fluid stream;
expanding the fluid stream such that CO₂ in the fluid stream transitions to a solid phase; and
separating at least some of the CO₂ from the fluid stream.

14. A method in accordance with Claim 13, wherein transferring heat from the fluid stream comprises:
channeling the fluid stream from a compressor (162) to a heat transfer device (164);and
channeling a fluid stream from a solid CO₂ removal device (168) to the heat transfer device (164).
